# EUROPÄISCHE PATENTSCHRIFT

(11) **EP 3 802 010 B1**
(45) Veröffentlichungstag und Bekanntmachung des Hinweises auf die Patenterteilung: **05.03.2025**
(21) Anmeldenummer: 19729211.3
(22) Anmeldetag: 31.05.2019
(51) Int. Cl.: B25J 9/12, B25J 17/00, B25J 19/02, B25J 9/10, B25J 13/08

(54) **ANTRIEBSVORRICHTUNG FÜR EINEN MANIPULATOR**
DRIVE DEVICE FOR A MANIPULATOR
DISPOSITIF D'ENTRAÎNEMENT POUR UN MANIPULATEUR

(30) Priorität: 02.06.2018 DE 102018004357
(43) Veröffentlichungstag der Anmeldung: 14.04.2021
(73) Patentinhaber: FRANKA EMIKA GmbH, 80797 München (DE)
(72) Erfinder: ROKAHR, Tim, 81245 München (DE)
(74) Vertreter: Cohausz & Florack
(86) Internationale Anmeldenummer: PCT/EP2019/064176
(87) Internationale Veröffentlichungsnummer: WO 2019/229232

(56) Entgegenhaltungen:
- WO-A1-2007/082954
- CA-A1- 2 940 490
- CN-U- 207 256 275
- DE-B3- 102016 004 810
- US-A1- 2015 053 040
- US-B1- 6 258 007
- B SCHÄFER ET AL: "Light-Weight Mechatronics and Sensorics for Robotic Exploration: a DLR Perspective", 25 February 2008 (2008-02-25), XP055358610, Retrieved from the Internet <URL:http://elib.dlr.de/55362/1/i-sairas2008_Sch?fer.pdf> [retrieved on 20170324]

## Beschreibung

Die vorliegende Erfindung betrifft eine Antriebsvorrichtung für ein Gelenk zwischen zwei Achsgliedern eines Manipulators eines Robotersystems.

Antriebseinheiten, die in Manipulatoren von Robotersystemen bzw. Roboterarmen zum Einsatz kommen, dienen dazu, ein Achsglied des in der Regel mehrachsig konstruierten Roboterarms gegenüber einem daran anschließenden Achsglied bewegbar, vorzugsweise drehbar, anzuordnen. Die auf diese Weise sich ergebende Beweglichkeit zwischen zwei aneinandergrenzenden Achsgliedern führt über die Anzahl der Achsglieder des Manipulators zu den entsprechenden Freiheitsgraden des Robotersystems.

Bei Industrierobotern kommen dabei Antriebseinheiten zum Einsatz, die eine Drehung eines Achsglieds um eine quer zu seiner Längserstreckung verlaufenden Achse gestatten. Weitere Antriebsvorrichtungen sind konzipiert, um eine Drehung um die Längsachse des Achsglieds zu gestatten. Hierfür kommen in der Regel entsprechend dimensionierte Elektromotoren zum Einsatz, die gegebenenfalls mit einem entsprechenden untersetzenden Getriebe zusammenwirken.

Bei Leichtbaurobotern werden die Antriebsvorrichtungen in das in sich geschlossene Gehäuse der Achsglieder eingebaut, da die Gehäuse bei den Manipulatoren von derartigen Robotertypen grundsätzlich wie ein Exoskelett konzipiert sind.

Bei den aus dem Stand der Technik bekannten Antriebsvorrichtungen ist in der Regel abtriebsseitig zumindest eine Sensorvorrichtung vorgesehen, um die Position, das Drehmoment und/oder die Drehzahl eines Abtriebselements zu detektieren, das das eine Achsglied gegenüber dem anderen Achsglied in Drehung versetzt. Zur Detektion der Antriebsdrehzahl, des Antriebsdrehmoments und/oder der Position einer von einem Motor angetriebenen Antriebswelle ist darüber hinaus motorseitig bzw. antriebsseitig eine weitere Sensorvorrichtung vorgesehen.

Die CA 2 940 490 A1 und die CN 207 256 275 U zeigen jeweils beispielhaft Antriebsvorrichtungen für Roboter mit entsprechenden Sensoreinrichtungen.

Um einen besonders kompakten Aufbau zu ermöglichen, ist in dem Deutschen Patent Nr. 10 2016 004 810 eine Antriebsvorrichtung insbesondere für den Einsatz bei Leichtbaurobotern vorgeschlagen worden, bei der beide Sensorvorrichtungen auf einer einzigen Leiterplatte angeordnet sind.

Diese Antriebsvorrichtung für ein zwischen zwei Achsgliedern eines Manipulators eines Robotersystems angeordnetes Gelenk zum rotatorischen Antrieb des einen Achsglieds gegenüber dem anderen Achsglied weist einen Motor, der eine Antriebswelle antreibt, und ein Abtriebselement auf, das mit dem einen Achsglied in Verbindung steht und von der Antriebswelle mittelbar oder unmittelbar in Drehung versetzt wird, wobei eine Leiterplatte bzw. Leiterplatine (PCB) vorgesehen ist, auf der eine Sensorvorrichtung für den durch die Antriebswelle bereitgestellten Antrieb und eine Sensorvorrichtung für den durch das Abtriebselement bereitgestellten Abtrieb angeordnet sind, wobei die Sensorvorrichtung für den Antrieb und die Sensorvorrichtung für den Abtrieb auf einander gegenüberliegenden Seiten der Leiterplatte angeordnet sind.

Des Weiteren ist eine Sensorwelle vorgesehen, mit der das Abtriebselement drehfest verbunden ist, wobei sich die Sensorwelle durch eine Öffnung in der Leiterplatte zu der Seite der Leiterplatte erstreckt, die dem Motor gegenüberliegt und wobei im Bereich des stirnseitigen axialen Endes der Sensorwelle oberhalb der Leiterplatte ein Positions- bzw. Sensorring vorgesehen ist, der mit der Sensorvorrichtung für den Abtrieb zusammenwirkt. Der Sensorring ist in einem Lagersitz drehbar gelagert und mit der Sensorwelle drehfest verbunden.

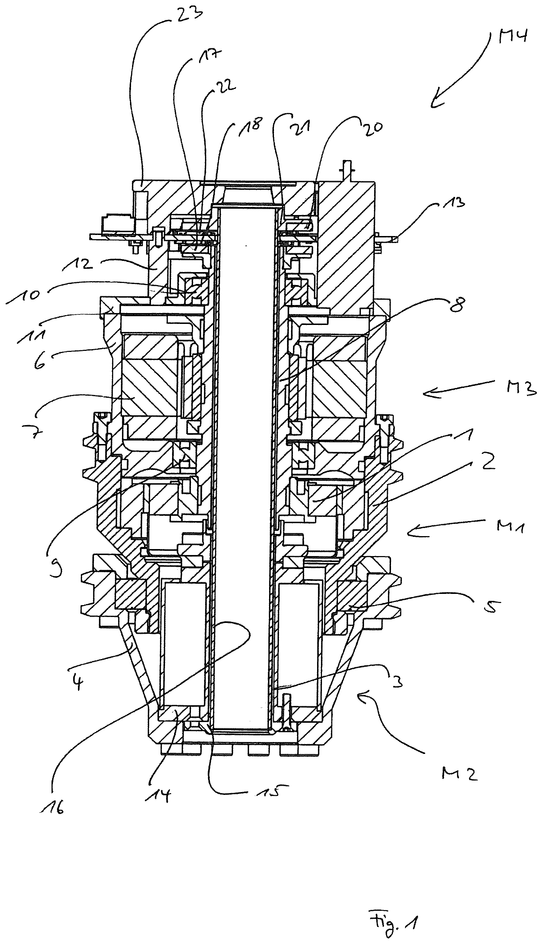

Bei einer derartigen Ausgestaltung der Antriebsvorrichtung aus dem Stand der Technik, wie diese exemplarisch in der Fig. 1 gezeigt ist, sind zwischen dem Abtrieb des Motors, in der Regel der Abtriebswelle, und der abtriebsseitigen Sensorvorrichtung in Bezug auf den oberhalb der Platine drehbar gelagerten Sensorring, mehrere Bauteile vorgesehen, wie einem Getriebe, diversen Abtriebs- und Lagerelementen, der Sensorwelle usw.. Diese Bauteile bilden eine Toleranzkette aus, in der deren einzelne Toleranzen letztendlich einfließen, so dass sich selbstredend die einzelnen Toleranzfehler aufaddieren, wenn der Abtrieb über die Rückführung mittels der Sensorwelle an einer der eigentlichen Abtriebsseite gegenüberliegenden Stelle, nämlich an der Leiterplatte, detektiert wird. Der Spalt zwischen dem abtriebsseitigen Sensorring und einem diesem zugeordneten Positionssensor kann daher, im Vergleich zum Spalt zwischen dem antriebsseitigen Sensorring und diesem zugeordneten Positionssensor, ggfs. zu groß werden. Darüber hinaus können die Flächen des Positionssensors und des Sensorrings nicht vollkommen parallel zueinander verlaufen, sondern mehr oder weniger leicht geneigt sein. Beides kann im Folgenden zu erheblichen Messfehlern führen.

Dies ist jedoch für eine hochgenaue Regelung, wie sie für einen insbesondere nachgiebigkeitsgeregelten Roboter unbedingt erforderlich ist, abträglich. Der Spalt zwischen dem abtriebsseitigen Sensorring und dem entsprechenden Positionssensor sollte daher engen Toleranzen unterliegen.

Ausgehend davon ist es eine Aufgabe der vorliegenden Erfindung, eine Antriebsvorrichtung für ein zwischen zwei Achsgliedern eines Manipulators eines Robotersystems, insbesondere, jedoch nicht ausschließlich der Leichtbauweise, zur Verfügung zu stellen, die die oben genannten, aus dem bisherigen Stand der Technik bekannten Nachteile ausräumt, insbesondere eng tolerierte Sensorvorrichtungen ermöglicht und dadurch die Zuverlässigkeit in Bezug auf die Detektion der antriebs- und abtriebsseitigen Parameter erhöht.

Gelöst wird diese Aufgabe mit einer Antriebsvorrichtung nach Anspruch 1 sowie mit einem Roboter nach Anspruch 9.

Die Erfindung betrifft demzufolge eine Antriebsvorrichtung für ein zwischen zwei Achsgliedern eines Manipulators eines Robotersystems angeordnetes Gelenk zum rotatorischen Antrieb des einen Achsglieds gegenüber dem anderen Achsglied, mit einem Motor, der eine Antriebswelle antreibt, mit einem Abtriebselement, das mit dem einen Achsglied in Verbindung steht und von der Antriebswelle mittelbar oder unmittelbar in Drehung versetzt wird, mit einer Leiterplatte, auf der eine Sensorvorrichtung für den durch die Antriebswelle bereitgestellten Antrieb und eine Sensorvorrichtung für den durch das Abtriebselement bereitgestellten Abtrieb angeordnet sind, wobei die Sensorvorrichtung für den Antrieb und die Sensorvorrichtung für den Abtrieb auf einander gegenüberliegenden Seiten der Leiterplatte angeordnet sind, und mit einer Sensorwelle, mit der das Abtriebselement drehfest verbunden ist, wobei sich die Sensorwelle durch eine Öffnung in der Leiterplatte zu der Seite der Leiterplatte erstreckt, die dem Motor gegenüberliegt und wobei im Bereich des stirnseitigen axialen Endes der Sensorwelle oberhalb der Leiterplatte ein Sensorring angeordnet ist, der mit der Sensorvorrichtung für den Abtrieb zusammenwirkt, wobei der Sensorring in einem Lagersitz drehbar gelagert und mit der Sensorwelle drehfest verbunden ist,
wobei gemäß der Erfindung zumindest ein Mittel vorgesehen ist, das so angeordnet und ausgebildet ist, dass es die Toleranzkette von dem Motor bis zu dem abtriebsseitigen Sensorring unterbricht bzw. auflöst.

Gemäß der Erfindung kann ein solches Mittel als zumindest ein Kugellager, vorzugsweise Radiallager realisiert sein, mittels welchem der Sensorring in dem Lagersitz drehbar gelagert ist.

In einer vorteilhaften Ausgestaltung der Antriebsvorrichtung ist der Sensorring mit einer Lagerhülse verbunden, die mit der Sensorwelle drehfest verbindbar ist. Die Sensorwelle kann beispielsweise in die Lagerhülse eingepresst werden derart, dass zwischen diesen ein Reibschluss ausgebildet wird. Hierbei können entsprechende Mittel, wie Toleranzringe oder auch Pressringe, zum Einsatz kommen.

Die Lagerhülse selbst wiederum ist dann in dem Lagersitz über das Kugellager drehbar gelagert.

Gemäß einer weiteren Ausgestaltung der Antriebsvorrichtung kann der Lagersitz unmittelbar mit der Leiterplatte fest verbunden, beispielsweise verschraubt, sein. Der Lagersitz wird also auf der dem Motor und den weiteren Komponenten der Antriebsvorrichtung gegenüberliegenden Seite der Leiterplatte angeordnet.

In einer vorteilhaften Ausgestaltung der Antriebsvorrichtung kann der Lagersitz mit einem Gehäuseabschnitt des Motorgehäuses fest verbunden sein, wobei der Gehäuseabschnitt die Leiterplatte durchgreift.

Um zu ermöglichen, dass sich die antriebsseitigen und abtriebsseitigen Parameter durch auf einer einzigen Leiterplatte angeordnete Sensorvorrichtungen erfassen lassen, ist es gemäß der Erfindung vorgesehen, dass die von dem Motor angetriebene Antriebswelle als eine Hohlwelle ausgebildet ist, die von der Sensorwelle in einem radialen Abstand durchsetzt wird, wobei sich die Antriebswelle bis zu der Leiterplatte erstreckt.

Vorzugsweise handelt es sich bei den Sensorvorrichtungen sowohl für den Abtrieb als auch für den Anrieb um Sensoren der gleichen Bauart, was die Auswerteelektronik weiter vereinfacht.

In einer bevorzugten Ausführungsform gemäß der Erfindung ist es weiterhin daher vorgesehen, dass der Sensorring für den Antrieb und der Sensorring für den Abtrieb deckungsgleich zu beiden Seiten der Leiterplatte einander gegenüberliegen.

Für eine exakte plane Führung des Sensorrings für den Antrieb, ist es gemäß der Erfindung vorgesehen, dass vorzugsweise ein Radiallager, das die Antriebswelle in dem Gehäuse des Motors, axial dem Abtrieb gegenüberliegend, führt, konstruktiv und baulich so nahe wie möglich an diesem Sensorring angeordnet ist.

Durch die Bereitstellung sowohl eines Radiallagers für den Sensorring für den Abtrieb als auch eines Radiallagers für die Antriebswelle mit einer entsprechenden Positionierung ist es möglich, beide Sensorringe so parallel und konzentrisch wie möglich zu den diesen zugeordneten Sensorchips anzuordnen und zu führen, wodurch axiale und winkelmäßige Toleranzabweichungen äußert gering gehalten werden können und sich Messfehler kaum einstellen.

Die Anordnung der Sensorvorrichtung für den Abtrieb und der Sensorvorrichtung für den Antrieb auf einer einzigen Leiterplatte erweist sich bereits an sich als weniger stör- und fehleranfällig, wodurch sich auch die Programmierung des Auswertealgorithmus wesentlich vereinfachen lässt. Durch die darüber hinaus gehende Entkopplung der abtriebsseitigen Toleranzkette durch eine Drehlagerung des Sensorrings der Sensorwelle mittels z.B. zumindest eines Radiallagers in einem Lagersitz kann die Fehleranfälligkeit einer solchen Anordnung noch weiter reduziert werden.

Auf Grund der Tatsache, dass infolge des Vorhandenseins des erfindungsgemäßen Mittels die Toleranzkette von dem Motor bis zu der abtriebsseitigen Sensorvorrichtung unterbrochen werden kann, können beispielsweise fertigungsbedingte Toleranzfehler der einzelnen Komponenten innerhalb dieser Toleranzkette bei der Detektion des Abtriebs und der entsprechenden Auswertung vollkommen unberücksichtigt bleiben. Dies ermöglicht es sogar, dass manche der Bauteile mit größeren Toleranzen und damit kostengünstiger gefertigt werden können.

In diesem Zusammenhang betrifft die Erfindung daher auch einen Roboter mit einem Manipulator aus mehreren Achsgliedern aufweisend eine Antriebsvorrichtung gemäß den oben geschilderten Ausführungsformen in zumindest einem zwischen Achsgliedern des Manipulators angeordneten Gelenk.

Weitere Vorteile und Merkmale ergeben sich aus der Beschreibung des anhand der beilegenden Zeichnungen dargestellten Ausführungsbeispiels. Es zeigen:
- Fig. 1: einen axialen Längsschnitt durch eine Antriebsvorrichtung gemäß dem Stand der Technik;
- Fig. 2: einen axialen Längsschnitt durch eine Antriebsvorrichtung gemäß der Erfindung;

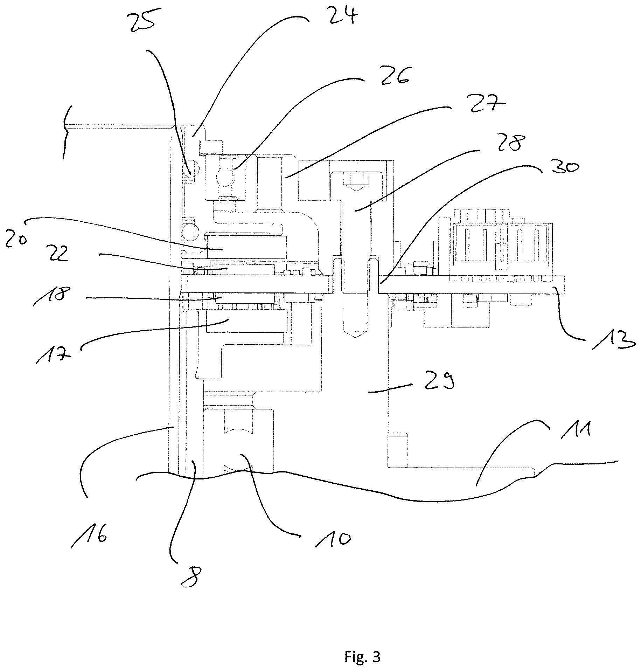

- Fig. 3: ausschnittsweise eine vergrößerte Ansicht der Lagerung der abtriebsseitigen Sensorvorrichtung; und

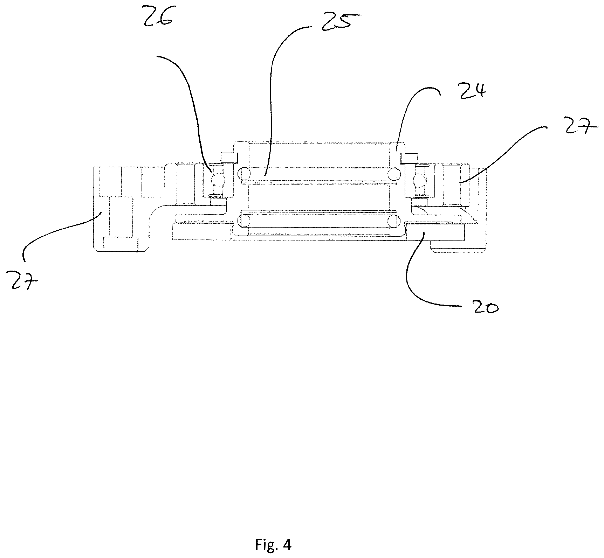

- Fig. 4: den erfindungsgemäßen Mechanismus bestehend aus Lagersitz, Lagerhülse und Radiallager.

In der Fig. 1 ist zum Verständnis exemplarisch eine Antriebsvorrichtung aus dem Stand der Technik in einer Querschnittsansicht entlang der Drehachse, d.h. Längserstreckung der Antriebsvorrichtung gezeigt, wie diese beispielsweise aus dem Deutschen Patent Nr. 10 2016 004 810 bekannt ist.

Wie zu erkennen ist, ist die Antriebsvorrichtung im Wesentlichen aus rotationssymmetrisch ausgestalteten Komponenten und Bauteilen aufgebaut, wobei eine Modulbauweise realisiert wird, bei der mehrere Module in einer axialen Ausrichtung funktional zusammenwirken und ineinandergreifen. Die Module sind für sich jeweils einzeln austauschbar und lassen sich miteinander mit Hilfe von entsprechend konzipierten und ausgestalteten Verbindungstechniken verbinden.

Die in Fig. 1 gezeigte Antriebsvorrichtung besteht im Wesentlichen aus vier funktional unterschiedlichen Antriebsmodulen.

Ein erstes Antriebsmodul M1 beinhaltet ein Getriebe 1, beispielsweise ein Wellgetriebe, das in einem Gehäuse 2 aufgenommen ist. Das Ausgangselement des Getriebes 1 ist über eine Abtriebswelle 3 mit einem Gehäuse 4 eines zweiten Antriebsmoduls M2 drehfest, d.h. drehmomentübertragend verbunden. Das zweite Antriebsmodul M2 dient dem Abtrieb und ist zu diesem Zweck mit einem nicht dargestellten Achsglied eines Manipulators bzw. Roboterarms drehfest verbunden, während das Gehäuse 2 des ersten Antriebsmoduls M1 mit einem nicht dargestellten weiteren Achsglied dieses Manipulators verbunden ist. Das Gehäuse 4 des zweiten Antriebsmoduls M2 ist mittels eines Radiallagers 5 gegenüber dem Gehäuse 2 des ersten Antriebsmoduls M1 drehbar gelagert.

Dem zweiten Antriebsmodul M2 axial gegenüberliegend ist an dem ersten Antriebsmodul M1 ein drittes Antriebsmodul M3 befestigt, das ein Gehäuse 6 aufweist, in dem ein Motor 7 angeordnet ist, der eine Motor- bzw. Antriebswelle 8 antreibt.

Die Antriebswelle 8 ist durch ein erstes Radiallager 9 in der Nähe des Getriebes 1 und durch ein zweites Radiallager 10 in einer Abdeckung 11 für das Gehäuse 6 drehbar und dadurch zentral in der Antriebsvorrichtung gelagert.

Auf dem Gehäuse 6 des dritten Antriebsmoduls M3 bzw. auf der diesem zugehörigen Abdeckung 11 ist über Verbindungs- bzw. Abstandshalter 12 ein viertes Antriebsmodul M4 befestigt, das eine Leiterplatte 13 bzw. PCB für eine Sensor- und Steuerelektronik aufweist.

Die Antriebswelle 8 des Motors 7, die als eine Hohlwelle ausgebildet ist, erstreckt sich durch die Abdeckung 11 hindurch bis zu der Seite der Leiterplatte 13, die der Abdeckung 11 zugewandt ist.

Das Gehäuse 4 des zweiten Antriebsmoduls M2 ist stirnseitig über einen Flansch 14 mit einem Flansch 15 einer Sensorwelle 16 drehfest verschraubt.

Wie in der Fig. 1 zu erkennen ist, durchsetzt die Sensorwelle 16 die Abtriebswelle 3 und die Antriebswelle 8 des Motors 7 in einem radialen Abstand und erstreckt sich durch eine Öffnung in der Leiterplatte 13 bis zu der Seite der Leiterplatte 13, die dem dritten Antriebsmodul M3 gegenüberliegt.

Das der Leiterplatte 13 zugewandte stirnseitige axiale Ende der Antriebswelle 8 weist einen Sensorring 17 auf, während auf der Leiterplatte 13 ein entsprechend diesem Sensorring 17 zugeordneter Sensorchip 18 angeordnet ist. Der Sensorring 17 ist auf einem Haltering 19 befestigt, so dass sich der Sensorring 17 mit der Antriebswelle 8 dreht.

Die Sensorwelle 16 weist ebenfalls an ihrem stirnseitigen axialen Ende einen Sensorring 20 auf, der ebenfalls in einem entsprechenden Haltering 21 befestigt ist und sich so über einen diesem Sensorring 20 zugeordneten Sensorchip 22 auf der Leiterplatte 13 dreht.

Um den Sensorring 20 der Sensorwelle 16 exakt konzentrisch und parallel zu dem Sensorchip 22 zu führen, ist bei diesem Stand der Technik auf der Leiterplatte 13 eine radiale Gleitführung 23 angeordnet, die mit den Abstandshaltern 12 verschraubt wird.

Um den Sensorring 17 der Antriebswelle 8 exakt konzentrisch und parallel zu dem Sensorchip 18 zu führen, ist das zweite Radiallager 10 des dritten Antriebsmoduls M3 so nahe wie möglich an der Leiterplatte 13 angeordnet.

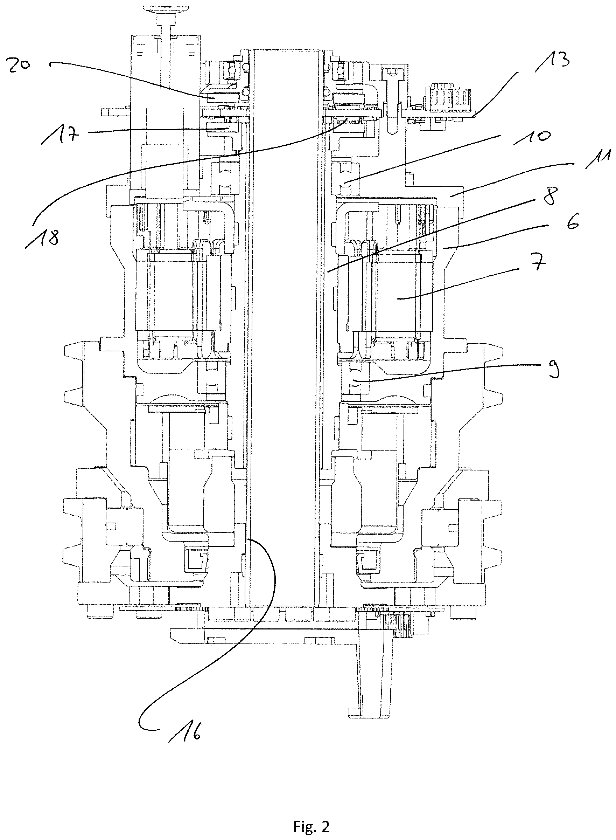

Die vorliegende Erfindung bezieht sich im weitesten Sinne auf eine alternative Ausgestaltung des Moduls M4, und ist daher prinzipiell unabhängig von der tatsächlichen Ausgestaltung der weiteren Module M1 bis M3 und deren Komponenten. Der Aufbau dieser Module M1 bis M3 kann aber im Prinzip analog wie beim Stand der Technik realisiert sein, wie aus der Fig. 2 zu ersehen ist.

In dieser Fig. 2, die schematisch eine ähnliche axiale Querschnittsansicht durch eine Antriebsvorrichtung zeigt, sind der Einfachheit halber identische Bauteile mit gleichen Bezugszeichen versehen.

Wie beim Stand der Technik ist der Sensorring 20 für den Abtrieb gegenüber dem Positionssensor bzw. Sensorchip 22 drehbar gelagert, jedoch nicht mittels einer Gleitführung 23.

Vielmehr ist es gemäß der Erfindung vorgesehen, den Sensorring 20 drehfest mit einer Lagerhülse 24 zu verbinden. Die Lagerhülse 24 ist so gestaltet und konzipiert, dass sie mit der Sensorwelle 16 drehfest verbindbar ist. Die Sensorwelle 16 wird in die Lagerhülse 24 so eingepresst, dass zwischen diesen unter Zwischenschaltung von Toleranzausgleichsringen oder ähnlichen Mitteln 25 vorzugsweise ein Reibschluss ausgebildet wird. Prinzipiell wäre jedoch auch ein Kraft- und/oder Formschluss denkbar.

Die Lagerhülse 24 ist über ein Radiallager 26 in einem Gehäuse eines Lagersitzes 27 drehbar gelagert. Der Lagersitz 27 wird mittels Schrauben 28 mit einem Gehäuseabschnitt 29 des Gehäuses 11 des Motors 7 fest verschraubt, wobei der Gehäuseabschnitt 29 eine Öffnung 30 in der Leiterplatte 13 zumindest teilweise durchgreift.

## Patentansprüche

1. Antriebsvorrichtung für ein zwischen zwei Achsgliedern eines Manipulators eines Robotersystems angeordnetes Gelenk zum rotatorischen Antrieb des einen Achsglieds gegenüber dem anderen Achsglied,
mit einem Motor (7), der eine Antriebswelle (8) antreibt, mit einem Abtriebselement (3,4), das mit dem einen Achsglied in Verbindung steht und von der Antriebswelle (8) mittelbar oder unmittelbar in Drehung versetzt wird,
mit einer Leiterplatte (13), auf der eine Sensorvorrichtung (18) für den durch die Antriebswelle (8) bereitgestellten Antrieb und eine Sensorvorrichtung (22) für den durch das Abtriebselement (3, 4) bereitgestellten Abtrieb angeordnet sind, wobei die Sensorvorrichtung (18) für den Antrieb und die Sensorvorrichtung (22) für den Abtrieb auf einander gegenüberliegenden Seiten der Leiterplatte (13) angeordnet sind,
und mit einer Sensorwelle (16), mit der das Abtriebselement (3,4) drehfest verbunden ist, wobei sich die Sensorwelle (16) durch eine Öffnung in der Leiterplatte (13) zu der Seite der Leiterplatte (13) erstreckt, die dem Motor (7) gegenüberliegt und wobei im Bereich des stirnseitigen axialen Endes der Sensorwelle (16), das auf der Seite der Leiterplatte (13) angeordnet ist, die dem Motor (7) gegenüberliegt, ein Sensorring (20) angeordnet ist, der mit der Sensorvorrichtung (22) für den Abtrieb zusammenwirkt,
wobei der Sensorring (20) in einem Lagersitz (27) drehbar gelagert und mit der Sensorwelle (16) drehfest verbunden ist, **dadurch gekennzeichnet, dass**
der Sensorring (20) über zumindest ein Kugellager (26) in dem Lagersitz (27) drehbar gelagert ist.

2. Antriebsvorrichtung nach Anspruch 1, bei der der Sensorring (20) mit einer Lagerhülse (24) verbunden ist, die mit der Sensorwelle (16) drehfest verbindbar ist.

3. Antriebsvorrichtung nach Anspruch 2, bei der die Lagerhülse (24) mit der Sensorwelle (16) über einen Reibschluss verbunden ist.

4. Antriebsvorrichtung nach Anspruch 2 oder 3, bei der die Lagerhülse (24) in dem Lagersitz (27) drehbar gelagert ist, der mit der Leiterplatte (13) fest verbunden ist.

5. Antriebsvorrichtung nach Anspruch 2 oder 3, bei der der Lagersitz (27) mit einem Gehäuseabschnitt (29) des Motorgehäuses (11) fest verbunden ist, wobei der Gehäuseabschnitt (29) die Leiterplatte (13) zumindest teilweise durchgreift.

6. Antriebsvorrichtung nach einem der vorhergehenden Ansprüche, bei der die Antriebswelle (8) als eine Hohlwelle ausgebildet ist und die Sensorwelle (16) die Antriebswelle (8) in einem radialen Abstand durchsetzt und sich bis zu der Leiterplatte (13) erstreckt.

7. Antriebsvorrichtung nach Anspruch 6, bei der die Sensorwelle (16) zur Aufnahme von Leitungskomponenten als Hohlwelle ausgebildet ist.

8. Antriebsvorrichtung nach Anspruch 7, bei der an dem stirnseitigen axialen Ende der Antriebswelle (8), das der Leiterplatte (13) zugewandt ist, ein Sensorring (17) angeordnet ist, der mit der Sensorvorrichtung (18) für den Antrieb zusammenwirkt, und bei der der Sensorring (17) für den Antrieb und der Sensorring (20) für den Abtrieb deckungsgleich zu beiden Seiten der Leiterplatte (13) einander gegenüberliegen.

9. Roboter mit einem Manipulator aus mehreren Achsgliedern aufweisend eine Antriebsvorrichtung gemäß den Ansprüchen 1 bis 8 in zumindest einem zwischen Achsgliedern des Manipulators angeordneten Gelenk.

## Claims

1. Drive device for a joint arranged between two axis members of a manipulator of a robot system for rotatably driving one of the axis members relative to the other axis member,
with a motor (7) which drives a drive shaft (8), with an output element (3, 4) which is in connection with the one axis member and is set in rotation indirectly or directly by the drive shaft (8),
with a circuit board (13) on which a sensor device (18) for the drive provided by the drive shaft (8) and a sensor device (22) for the output provided by the output element (3, 4) are arranged, wherein the sensor device (18) for the drive and the sensor device (22) for the output being arranged on opposite sides of the circuit board (13),
and with a sensor shaft (16) to which the output element (3, 4) is connected in a rotationally fixed manner, wherein the sensor shaft (16)
extends through an opening in the circuit board (13) to the side of the circuit board (13) that is located opposite the motor (7), and wherein a sensor ring (20) which cooperates with the sensor device (22) for the output is arranged in a region of the axial end of the sensor shaft (16) that is located on the side of the circuit board (13) that is located opposite of the motor (7),,
wherein the sensor ring (20) is rotatably mounted in a bearing seat (27) and is connected to the sensor shaft (16) in a rotationally fixed manner, **characterized in that**
the sensor ring (20) is rotatably mounted in the bearing seat (27) by means of at least one ball bearing (26).

2. Drive device according to claim 1, in which the sensor ring (20) is connected to a bearing sleeve (24) which can be connected to the sensor shaft (16) in a rotationally fixed manner.

3. Drive device according to claim 2, in which the bearing sleeve (24) is connected to the sensor shaft (16) by means of a frictional bond.

4. Drive device according to claim 2 or 3, in which the bearing sleeve (24) is rotatably mounted in the bearing seat (27), which is fixedly connected to the circuit board (13).

5. Drive device according to claim 2 or 3, in which the bearing seat (27) is firmly connected to a housing section (29) of the motor housing (11), wherein the housing section (29) engages at least partially through the circuit board (13).

6. Drive device according to one of the preceding claims, in which the drive shaft (8) is formed as a hollow shaft and the sensor shaft (16) passes through the drive shaft (8) at a radial distance and extends to the circuit board (13).

7. Drive device according to claim 6, in which the sensor shaft (16) is formed as a hollow shaft for receiving line components.

8. Drive device according to claim 7, in which a sensor ring (17) is arranged at the axial end of the drive shaft (8) facing the circuit board (13), which cooperates with the sensor device (18) for the drive, and in which the sensor ring (17) for the drive and the sensor ring (20) for the output are located opposite to one another congruently on both sides of the circuit board (13).

9. Robot with a manipulator comprising a plurality of axis member and having a drive device according to claims 1 to 8 in at least one joint arranged between axis members of the manipulator.

## Revendications

1. Dispositif d'entraînement pour une articulation disposée entre deux éléments d'axe d'un manipulateur d'un système robot pour un entraînement en rotation de l'un des éléments d'axe par rapport à l'autre élément d'axe,
avec un moteur (7) qui entraîne un arbre d'entraînement (8), avec un élément de sortie (3, 4) qui est en liaison avec l'un des éléments de l'axe et qui est entraîné en rotation directement ou indirectement par l'arbre d'entraînement (8),
avec une carte de circuit (13) sur laquelle sont disposés un dispositif de capteur (18) pour l'entraînement fourni par l'arbre d'entraînement (8) et un dispositif de capteur (22) pour la sortie fournie par l'élément de sortie (3, 4), où le dispositif de capteur (18) pour l'entraînement et le dispositif de capteur (22) pour la sortie sont disposés sur des côtés mutuellement opposés de la carte de circuit (13),
et avec un arbre de capteur (16), avec lequel l'élément de sortie (3, 4) est relié de manière fixé en rotation, où l'arbre de capteur (16)
s'étend à travers une ouverture dans la carte de circuit (13) vers le côté de la carte de circuit imprimé (13) qui est opposé au moteur (7), et où, dans la zone de l'extrémité axiale frontale de l'arbre de capteur (16), qui est disposée sur le côté de la carte de circuit imprimé (13) qui est opposé au moteur (7), une bague de capteur (20) est disposée, qui coopère avec le dispositif de capteur (22) pour la sortie,
où la bague de capteur (20) est logée de manière rotative dans un siège de palier (27) et est reliée de manière fixé en rotation à l'arbre de capteur (16), **caractérisée en ce que**
la bague de capteur (20) est montée de manière rotative dans le siège de palier (27) par intermédiaire d'au moins un roulement à billes (26).

2. Dispositif d'entraînement selon la revendication 1, où la bague de capteur (20) est reliée à un manchon de palier (24) qui est reliable de manière fixé en rotation à l'arbre de capteur (16).

3. Dispositif d'entraînement selon la revendication 2, où le manchon de palier (24) est relié à l'arbre de capteur (16) par une liaison par friction.

4. Dispositif d'entraînement selon la revendication 2 ou 3, où le manchon de palier (24) est monté de manière rotative dans le siège de palier (27) qui est fixé avec la carte de circuit (13).

5. Dispositif d'entraînement selon la revendication 2 ou 3, où le siège de palier (27) est fixé à une portion de boîtier (29) du boîtier de moteur (11), où la portion de boîtier (29) traverse au moins partiellement la carte de circuit (13).

6. Dispositif d'entraînement selon l'une des revendications précédentes, où l'arbre d'entraînement (8) est formé comme un arbre creux et l'arbre de capteur (16) traverse l'arbre d'entraînement (8) à une distance radiale et s'étend jusqu'à la carte de circuit (13).

7. Dispositif d'entraînement selon la revendication 6, où l'arbre de capteur (16) est réalisé sous forme d'arbre creux pour recevoir des composants conducteurs.

8. Dispositif d'entraînement selon la revendication 7, où une bague de capteur (17) 35, qui coopère avec le dispositif de capteur (18) pour l'entraînement, est disposée à l'extrémité axiale frontale de l'arbre d'entraînement (8), qui est tournée vers la carte de circuit (13), et où la bague de capteur (17) pour l'entraînement et la bague de capteur (20) pour la sortie se font face de manière congruent de part et d'autre de la carte de circuit (13).

9. Robot avec un manipulateur composé de plusieurs éléments d'axe, ayant un dispositif d'entraînement selon les revendications 1 à 8 dans au moins une articulation disposée entre des éléments d'axe du manipulateur.
